# EUROPÄISCHE PATENTSCHRIFT

(11) **EP 3 371 754 B1**
(45) Veröffentlichungstag und Bekanntmachung des Hinweises auf die Patenterteilung: **08.06.2022**
(21) Anmeldenummer: 16782052.1
(22) Anmeldetag: 14.10.2016
(51) Int. Cl.: G06Q 10/00, G06Q 10/08, G06Q 50/00

(54) **BEREITSTELLEN VON VEREINZELTEN MATERIALTEILEN UND VERARBEITEN SOLCHER MATERIALTEILE**
PROVISION OF SEPARATED MATERIAL PARTS AND PROCESSING OF SUCH MATERIAL PARTS
PRÉPARATION DE PIÈCES DE MATÉRIAU SÉPARÉES ET TRAITEMENT DE PIÈCES DE MATÉRIAU DE CE TYPE

(30) Priorität: 02.11.2015 DE 102015221417
(43) Veröffentlichungstag der Anmeldung: 12.09.2018
(73) Patentinhaber: Bayerische Motoren Werke Aktiengesellschaft, 80809 München (DE)
(72) Erfinder: GLÜCK, Bernhard, 82256 Fürstenfeldbruck (DE); PURR, Stephan, 93051 Regensburg (DE)
(74) Vertreter: Mayer-Martin, Christian
(86) Internationale Anmeldenummer: PCT/EP2016/074718
(87) Internationale Veröffentlichungsnummer: WO 2017/076608

(56) Entgegenhaltungen:
- EP-A1- 2 380 683
- WO-A1-03/058532
- WO-A1-2011/104736
- WO-A1-2013/056951
- DE-B3-102006 006 733
- US-B1- 6 830 941
- Purr Stephan ET AL: "Stamping Plant 4.0 - Basics for the Application of Data Mining Methods in Manufacturing Car Body Parts", Key Engineering Materials, vol. 639, 1 March 2015 (2015-03-01), pages 21-30, XP055811244, DOI: 10.4028/www.scientific.net/KEM.639.21
- Thoben K.-D ET AL: "Optimierung von Fertigungsketten Einzelteilverfolgung von Metallbauteilen entlang des Fertigungsprozesses", Zeitschrift fuer Wirtschaftlichen Fabrikbetrieb, 1 January 2004 (2004-01-01), pages 162-165, XP055811665, DOI: 10.3139/104.100758 Retrieved from the Internet: URL:https://www.researchgate.net/publicati on/37933734_Optimierung_von_Fertigungskett en_Einzelteilverfolgung_von_Metallbauteile n_entlang_des_Fertigungsprozesses [retrieved on 2021-06-08]

## Beschreibung

Die Erfindung betrifft ein Verfahren zum Herstellen eines Bauteils aus einem bandförmigen Halbzeug aus Metallband mittels einer Coil-Anlage. Die Erfindung ist insbesondere vorteilhaft anwendbar auf eine Verwendung des Verfahrens zum Herstellen von Fahrzeugen, insbesondere Personenkraftwägen und Motorrädern.

Bei der Erfassung von Materialparametern (Materialkenngrößen) an Coil-Anlagen (die auch als Bandanlagen bezeichnet werden können) wird zurzeit ein kontinuierlicher kompletter Messschrieb über die gesamte Länge des Coils oder aufgewickelten Metallbands erzeugt, z.B. als eine sog. Öllandkarte. Alternativ können stichprobenartig einzelne Platinen oder Proben entnommen und einer zerstörenden Prüfung unterzogen werden, z.B. einem Zugversuch zur Ermittlung mechanischer Eigenschaften wie Streckgrenze und Zugfestigkeit. In den Coil-Anlagen wird das Metallband in Platinen vereinzelt (z.B. durch Abpressen oder Schneiden), und die Platinen werden dann typischerweise abgestapelt. Durch das Abstapeln der vereinzelten Platinen am Ende der Coil-Anlage erfolgt meist eine Umkehrung der Verarbeitungsreihenfolge (zuerst geschnittene Platinen liegen z.B. in dem Stapel unten) und häufig auch eine komplette Durchmischung der Platinen (z.B., wenn die Ablage wechselnd auf mehrere Stapel erfolgt). Somit ist eine detaillierte Nachverfolgbarkeit bzw. Zuweisung der gemessenen Materialparameter des Coils zu einzelnen Platinen oder Platinenstapeln nicht möglich. Bei einer Herstellung von Bauteilen aus den Platinen z.B. in einer Pressenstraße ist es somit nicht möglich, die gemessenen Materialparameter platinen- bzw. bauteilgenau auszuwerten und auf Veränderungen im Material schon im Vorfeld reagieren zu können. Zudem werden Prozessparameter bei der Herstellung der Bauteile und deren Veränderungen nicht durchgängig gespeichert. Nach der Bauteilherstellung und nach einem Verlassen des Bauteils z.B. aus der Pressenstraße ist selbst eine globale Zuordnung der gemessenen Materialparameter zu einem fertigen Bauteil nicht mehr möglich. Aktuell gibt es keine detaillierte Kenntnis, welche Bauteile sich in welchem Transportbehälter befinden. Eine Bauteilverfolgung ist nur global über einen TK (Teilekennzeichnungs)-Stempel, aber ohne detaillierte Rückverfolgung, möglich.

Folglich existiert keine detaillierte Prozesstransparenz für die Bauteile. Auch liegt keine Kenntnis der Material- und Prozessparameter des fertigen Bauteils vor. Es ist auch keine Nachverfolgbarkeit von Bauteilen möglich. Der Prozess der Bauteilherstellung in dem Presswerk läuft aktuell größtenteils erfahrungsbasiert anstatt wissensbasiert.

DE 10 2006 006 733 B3 offenbart ein Verfahren und eine Vorrichtung zur Identifizierung eines Teilstücks eines Halbzeugs. Um insbesondere bei der Herstellung von metallischen Halbzeugen, wie beispielsweise Blechen, eine eindeutige Zuordnung eines Teilstücks zum Halbzeug zu ermöglichen, wird eine das Halbzeug charakterisierende Messgröße kontinuierlich erfasst und als Messprofil, insbesondere Dickenprofil, gespeichert. Bei Bedarf wird zur Zuordnung ein dem Teilstück zugehöriges Teil-Messprofil mit den abgespeicherten Messprofilen auf Übereinstimmung überprüft.

EP 2 380 683 A1 offenbart ein Herstellungsverfahren für Aluminiumlegierungs-Stränge. Wenn ein durch Stranggießen einer geschmolzenen Aluminiumlegierung in Stabform erhaltener Aluminiumlegierungsstrang mit Hilfe einer Schneidvorrichtung auf eine vorbestimmte Länge geschnitten wird, und dann der so geschnittene Aluminiumlegierungsstrang in einen Produktträgerbehälter mit einer Identifikationsmarkierung geladen wird, werden der Gießzustand und die Prüfergebnisse des Aluminiumlegierungsstrangs in der Speichereinheit einer Produktionssteuervorrichtung in Verbindung mit einer Identifikationsmarkierung gespeichert, um die Qualität des Aluminiumlegierungsstrangs, der für die Bearbeitung verwendet wird, auf hohem Niveau zu halten.

Purr Stephan et al.: "Stamping Plant 4.0 - Basics for the Application of Data Mining Methods in Manufacturing Car Body Parts", Key Engineering Materials, Bd. 639, 1. März 2015 (2015-03-01), Seiten 21-30, XP055811244, offenbart, dass eine datengetriebene Qualitätsbewertung im Stanzprozess von Karosserieteilen vielversprechend ist, da Abhängigkeiten im Prozess noch nicht ausreichend erforscht worden seien. Die Anwendung von Data-Mining-Methoden für den Prozess in Presswerken würde jedoch eine Vielzahl von Beispieldatensätzen erfordern. Die Erfassung dieser Daten stellt heute eine große Herausforderung dar, da die notwendigen Daten nur unzureichend gemessen, aufgezeichnet oder gespeichert werden. Daher müssten zunächst die Voraussetzungen für die Probendatenerfassung geschaffen werden, um eventuelle Zusammenhänge untersuchen zu können. Darüber hinaus ändern sich die Prozessbedingungen im Laufe der Zeit aufgrund von Verschleißmechanismen. Daher bleiben die Ergebnisse nicht gültig, und eine ständige Datenerfassung ist erforderlich. In dieser Publikation wird zunächst die aktuelle Situation in Stanzwerken hinsichtlich der Prozessrobustheit diskutiert und die Notwendigkeit datengetriebener Verfahren aufgezeigt. Anschließend wird der Stand der Technik hinsichtlich der Möglichkeit der Erhebung von Musterdatensätzen zur Qualitätsanalyse bei der Herstellung von Karosserieteilen erforscht. Am Ende dieser Arbeit wird ein Überblick darüber gegeben, wie diese Datenerhebung umgesetzt wurde und welche Potenziale zu erwarten sind.

Thoben K.-D et al.: "Optimierung von Fertigungsketten Einzelteilverfolgung von Metallbauteilen entlang des Fertigungsprozesses", Zeitschrift fuer Wirtschaftlichen Fabrikbetrieb, 1. Januar 2004 (2004-01-01), Seiten 162-165, XP055811665, offenbart, dass durch eine ganzheitliche Betrachtung eines Fertigungsprozesses bisher nicht bekannte Optimierungspotenziale systematisch identifiziert werden können. Damit soll es u.a. möglich sein, Fertigungsschritte untereinander besser abzustimmen. Genauer beschrieben werden das Konzept und die Umsetzung einer Einzelteilverfolgung von Bauteilen entlang eines gesamten Fertigungsprozesses. Das verfolgte Ziel besteht darin, den sich innerhalb eines Fertigungsprozesses in einem Bauteil kontinuierlich aufbauenden Bauteilverzug individuell zurückverfolgen zu können, um so den Fertigungsschritt "Hartbearbeitung" optimieren zu können.

Es ist die **Aufgabe** der vorliegenden Erfindung, die Nachteile des Standes der Technik zumindest teilweise zu überwinden und insbesondere eine verbesserte Möglichkeit zum Umformen von vereinzelten Materialteilen aus einem bandförmigen Halbzeug anzubieten.

Diese Aufgabe wird gemäß den Merkmalen der unabhängigen Ansprüche gelöst. Bevorzugte Ausführungsformen sind insbesondere den abhängigen Ansprüchen entnehmbar.

Die Aufgabe wird gelöst durch ein Verfahren zum Herstellen eines Bauteils aus einem bandförmigen Halbzeug in Form einer Metall-Coil mittels einer Coil-Anlage, bei dem vereinzelte Materialteile in Form metallischer Platinen aus der Metall-Coil hergestellt werden, indem ein platinengenaues Messen mindestens eines Teile-Parameters der Metall-Coil durchgeführt wird, aus der Metall-Coil die Platinen vereinzelt werden und mit einer individuellen Kennung versehen werden und die individuellen Kennungen der Platinen mit dem jeweils bestimmten mindestens einen Teile-Parameter verknüpft bereitgestellt werden, folgend eine jeweilige individuelle Kennung der Platinen abgelesen wird, die Platinen beruhend auf mindestens einem ihrer individuellen Kennung zugeordneten Teile-Parameter zu jeweiligen Bauteilen verarbeitet werden und die individuellen Kennungen dieser Bauteile mit jeweiligen Verarbeitungs-Parametern verknüpft bereitgestellt werden, der mindestens eine Teile-Parameter mindestens einen Herstellungsprozess-Parameter umfasst und die Platinen mit dem Vereinzeln beruhend auf mindestens einem ihrer individuellen Kennung zugeordneten Teile-Parameter umgeformt werden, wobei die Verarbeitungs-Parameter des Umformens an die Teile-Parameter angepasst werden und wobei die individuellen Kennungen und zugeordneten Teile-Parameter miteinander verknüpft als Datensätze in einer Datenbank gespeichert bereitgestellt werden.

Dieses Verfahren weist den Vorteil auf, dass sich im Fahrzeugbau die Platine eindeutig identifizieren und dadurch in einem folgenden Transport und/oder Verarbeitungsablauf weiterverfolgen lässt. Auch lässt sich eine Eignung der Platine auf eine folgende Weiterverarbeitung einschätzen. Zudem werden so eine Qualitätskontrolle und eine Qualitätsoptimierung erleichtert. Ein weiterer Vorteil besteht darin, dass die Verfolgbarkeit und Kenntnis der Eigenschaften der Platinen auf die daraus hergestellten Bauteile erweiterbar ist und die Vorteile für die Platinen nun auch auf die daraus hergestellten Bauteile erreichbar sind. Noch ein Vorteil besteht in einer verbesserten Bauteilqualität.

Das Vereinzeln kann insbesondere ein abschnittsweises Abtrennen von der Metall-Coil umfassen. Die Platine kann dann ein vereinzelter Materialabschnitt sein.

Unter einer bereichsgenauen Bestimmung mindestens eines Teile-Parameters kann verstanden werden, dass sich der mindestens eine bestimmte Teile-Parameter einer bestimmten Platine zuordnen lässt. Insbesondere lässt sich jeder Platine mindestens ein Teile-Parameter zuordnen.

Das Messen kann z.B. mindestens eine Inline-Messung an der Metall-Coil und/oder an der bereits vereinzelten Platine umfassen.

Mindestens ein anderer Teile-Parameter mag auch nicht-bereichsgenau bestimmt werden. Ein solches nicht-bereichsgenaues Bestimmen kann ein Bestimmen mindestens eines für die gesamte Metall-Coil geltenden Teile-Parameters umfassen und beispielsweise ein Messen eines für die gesamte Metall-Coil gültigen "globalen" Teile-Parameters umfassen. Ein nicht-bereichsgenaues Bestimmen dann auch ein Bereitstellen oder Übermitteln von Teile-Parametern bzw. deren Werten durch einen Hersteller der Metall-Coil oder des diesem zugrundeliegenden Materials sein, beispielsweise eine Metallart usw.

Die individuelle Kennung kann auch als Identifikator oder "ID" bezeichnet werden, speziell als "Teile-ID". Die individuelle Kennung kann eine individuelle Abfolge von Ziffern und/oder Buchstaben oder ein individueller Code wie ein Barcode, ein QR-Code, ein Datamatrixcode usw. sein oder aufweisen.

Dass die individuellen Kennungen einer Platine mit dem jeweils dazu bestimmten mindestens einen Teile-Parameter verknüpft bereitgestellt werden, kann umfassen, dass die individuellen Kennungen verknüpft mit den zugehörigen Teile-Parametern gespeichert werden, z.B. in einer Datenbank. Zusätzlich kann mindestens ein Teile-Parameter (z.B. mindestens ein gemessener Wert) auch direkt auf die Platine aufgedruckt werden. Dies kann in lesbarer, aber auch in kodierter Form erfolgen.

Unter einer Coil-Anlage kann insbesondere eine Anlage zur mechanischen Bearbeitung von Metallbändern (Coils) verstanden werden. Die mechanische Bearbeitung umfasst ein Vereinzeln in Platinen oder Tafeln und ein Weiterverarbeiten der Platinen durch Umformen und ggf. zusätzlich Beschichten usw. umfassen.

Das Metallband kann aus Blech bestehen und z.B. vor dem Einbringen in die Coil-Anlage als ein Coil in Form einer Blechrolle vorliegen. Die Platine kann insbesondere eine ebene Metallplatte sein.

Die mit dem Vereinzeln umgeformten Platinen können auch als Folgeverbundbauteile bezeichnet werden. Dabei werden die Platinen vor und/oder nach dem Vereinzeln umgeformt, so dass die Platinen teilfertige Bauteile oder Fertigbauteile sein können. Beispielsweise kann die Metall-Coil getrennt (z.B. gestanzt, lasergeschnitten usw.), aber noch nicht vereinzelt werden, und dann können Teilbereiche davon umgeformt (z.B. umgebogen usw.) werden. Dies ermöglicht eine besonders effiziente Herstellung von Bauteilen.

Es ist noch eine Ausgestaltung, dass der mindestens eine Teile-Parameter mindestens einen Material-Parameter umfasst. So kann eine besonders genaue Charakterisierung der Platine erreicht werden. Der mindestens eine Material-Parameter kann beispielsweise eine Blechdicke, ein Vorhandensein einer Ölfilmauflage, eine Oberflächenrauheit, eine Zugfestigkeit, eine Streckgrenze usw. sein oder umfassen. Zumindest einer dieser Material-Parameter kann in der Vereinzelungsanlage erfasst werden. Der mindestens eine Herstellungsprozess-Parameter kann beispielsweise Umgebungstemperatur(en), einen Zeitpunkt einer Vereinzelung (z.B. durch Abpressen), eine Ablageposition der Platine im Stapel usw. umfassen. Zumindest einer der Herstellungsprozess-Parameter kann in der Vereinzelungsanlage erfasst werden. Zumindest ein Teile-Parameter kann - wie auch schon weiter oben ausgeführt - ein "globaler" Parameter in dem Sinne sein, dass er sich aus der Herkunft der Platine aus einer bestimmten Metall-Coil ergibt und für alle aus einer gemeinsamen Metall-Coil vereinzelten Platinen gleich ist. Das Bestimmen eines globalen Parameters kann ein datentechnisches Erfassen oder Übernehmen dieses Parameters beinhalten.

Es ist eine weitere Ausgestaltung, dass die aus Metall bestehenden Platinen mittels Laserbeschriftens mit ihrer individuelle Kennung (Teile-ID) versehen werden Eine Position, Größe und Form der Beschriftung sind so vorteilhafterweise grundsätzlich frei einstellbar. Die Beschriftungsposition kann insbesondere exakt so auf der Platine gewählt werden, dass die Beschriftung nach einer Umformung / Bauteilherstellung an der gewünschten Stelle des Bauteils zum Liegen kommt. Das Laserbeschriften arbeitet praktisch materialverlustfrei. Es gibt praktisch keinen Einfluss auf das Umformverhalten der Platine oder den Prozess (z.B. durch Verunreinigungen durch Tinte). Ferner bleibt ein Korrosionsschutz durch die geringe Abtragtiefe auch noch nach der Beschriftung gegeben. Ein Auslesen der Teile-ID ist einfach mittels eines Kamerasystems (Zeilenkamera, Matrixkamera usw.) oder durch einen menschlichen Ableser möglich.

Es ist eine Weiterbildung, dass eine Schriftbreite zwischen 0,001 mm und 2 mm, vorzugsweise zwischen 0,01 mm bis 0,2 mm, liegt. So wird eine gute Ablesbarkeit mit einer geringen Veränderung der Platine besonders effektiv kombiniert.

Es ist noch eine weitere Ausgestaltung, dass die Platinen vor ihrem weiteren Verarbeiten anhand mindestens eines zugehörigen Teile-Parameters aussortiert werden können. Dies gilt insbesondere für den Fall, dass schon im Vorfeld (z.B. anhand der erfassten Material-parameter und/oder Herstellungsprozess-Parameter) erkannt wird, dass eine Qualität von aus den Platinen hergestellten Bauteilen nicht gewährleistet werden kann oder eine Anpassung einer Weiterverarbeitung an solche Platinen zu aufwendig wäre. Das Aussortieren der Platinen kann manuell oder automatisiert erfolgen.

Es ist noch eine Ausgestaltung, dass den Platinen eine Materialteil-Lagerungskennung zugeordnet wird, z.B. in einer Datenbank. Dies kann dieselbe Datenbank sein, in der auch die individuellen Kennungen verknüpft mit den zugehörigen Teile-Parametern gespeichert sind. Die Materialteil-Lagerungskennung kann bei Lagerung der Platinen in einem Stapel einer Kennung des Stapels ("Stapel-ID") und bei Lagerung der Platinen in einem Behälter einer Kennung des Behälters ("Container-ID") entsprechen. So ergibt sich der Vorteil, dass sich die Lagerungsorte der Platinen und die Eigenschaften der in einem Stapel oder Behälter untergebrachten Platinen schnell bestimmen lassen. Dies wiederum kann eine Logistik der Platinen und/oder von daraus hergestellten Bauteilen und weiteren Baugruppen erheblich erleichtern. Beispielsweise ist nun in einem Platinenlager eine Erfassung einer Lagerposition des Stapels möglich und dadurch jederzeit eine Kenntnis darüber vorhanden, an welcher Stelle sich jede einzelne Platine gerade befindet. Eine Anlieferung der Stapel an eine Weiterverarbeitungsanlage (z.B. an eine Presse) kann daher in einer für den Weiterverarbeitungsprozess bzw. die Bauteilqualität verbesserten Reihenfolge erfolgen. Darüber hinaus kann ein Prüfaufwand durch genaue Kenntnis des aktuellen Standortes von problematischen Platinen verringert werden.

Es ist eine Weiterbildung, dass die Platinen folgend beispielsweise in einer Pressenstraße gepresst werden.

Unter einem Verarbeitungs-Parameter kann insbesondere eine Kenngröße oder Parameter verstanden werden, der das verarbeitete Materialteil bzw. das Bauteil und/oder den dazugehörigen Verarbeitungsablauf charakterisiert.

Ein Erfassen oder Auslesen der Teile-ID kann am Anfang der Verarbeitungsanlage (z.B. an der sog. "Front-of-Line" einer Pressenstraße) für jede einzelne Platine erfolgen ("Inline-Erfassung").

Dass die Platinen beruhend auf mindestens einem ihrer individuellen Kennung zugeordneten Teile-Parameter verarbeitet werden, umfasst eine (manuelle oder automatisierte) Anpassung der Verarbeitungs-Parameter an die Platine bzw. das daraus zu fertigende Bauteil. Dabei werden die bei der Herstellung der Platinen in der wie oben beschriebenen Datenbank verwendeten Datensätze (Teile-ID, Teile-Parameter usw.) als Eingangsgrößen für das (Weiter-) Verarbeiten genutzt werden. Beispielsweise wird eine Möglichkeit eines vorrausschauenden Betriebs für das Personal einer Verarbeitungsanlage (z.B. das Pressenpersonal) bzw. für die Anlage selbst bereitgestellt.

Eine andere mögliche Form der Nutzung der Teile-Parameter der Platine besteht darin, eine Anlieferreihenfolge der Stapel für eine besonders effektive Verarbeitung zu wählen. Dadurch besteht die Möglichkeit, die Reihenfolge der zu verarbeitenden Platinen usw., Stapel bzw. Bauteile, Behälter usw. so zu verändern, dass die Anpassung des Verarbeitungsprozesses an die Teile-Parameter möglichst selten durchgeführt zu werden braucht.

Es ist noch eine Ausgestaltung, dass der mindestens eine Teile-Parameter als Eingangsgröße für eine insbesondere prädiktive Analyse verwendet wird und mindestens ein aus der prädiktiven Analyse bestimmter Prädiktor für eine Bauteilqualität als ein jeweiliger Parameter zum Verarbeiten der Platine verwendet wird. Dadurch können eine noch weiter verbesserte Bauteilqualität, ein noch effizienterer Betrieb der Verarbeitungsanlage und/oder ein noch weiter verbesserte Logistik erreicht werden. Es ist also möglich, durch Algorithmen Vorhersagen über die künftige Bauteilqualität zu treffen und ggf. den Verarbeitungsprozess entsprechend anpassen zu können. Insbesondere kann die Analyse ein selbstlernendes System sein oder umfassen. Je mehr Datensätze in der Datenbank dabei abgelegt werden, desto detaillierter bzw. treffsicherer können die Modelle angepasst oder Vorhersagen getroffen werden. Dies wiederum erlaubt eine Verringerung von Stillstandzeiten der Verarbeitungsanlage durch seltenere Anpassungen des Verarbeitungsprozesses.

Unter einer prädiktiven Analyse kann insbesondere eine Analyse oder Modellierung verstanden werden, die sich mit der Vorhersage ("Prediction") der wahrscheinlichen Zukunft und Trends auseinandersetzt. Ein Element der prädiktiven Analyse ist der sog. "Prädiktor", nämlich eine Variable (z.B. ein mit einer Kennung verknüpfter Parameter), die für eine einzelne Einheit (z.B. eine Platine oder ein Bauteil) gemessen wird, um deren zukünftiges Verhalten (entsprechend einer Bauteilqualität) vorherzusagen. Mehrere Prädikatoren können zu einem Vorhersagemodell kombiniert werden, um künftige Wahrscheinlichkeiten mit einem akzeptablen Maß an Zuverlässigkeit zu analysieren. Bei der prädikativen Modellierung werden beispielsweise Daten gesammelt (z.B. Kennungen und zugehörige Parameter), ein statistisches Modell erstellt, Vorhersagen getroffen und das Modell validiert oder geändert, wenn zusätzliche Daten verfügbar sind.

Durch die Verfügbarkeit relevanter Parameter in einer Datenbank können also über Optimierungsalgorithmen Modelle (insbesondere unter Nutzung der prädiktiven Analyse) entwickelt werden, mit deren Hilfe beispielsweise bei bekannten Material-Parametern durch entsprechende Anpassung der Prozessparameter die Bauteilqualität auf ein gewünschtes Niveau gebracht werden kann. Die Modelle sind insbesondere selbstlernend, d.h. dass die Modelle durch die stetig steigende Anzahl an Bauteilen bzw. Informationen ständig verbessert werden und die Vorhersagegenauigkeit damit besser wird. Die von den Modellen vorgeschlagenen Prozessparameter können für das Personal einer Verarbeitungsanlage (z.B. einer Presse) als Information oder Empfehlung angezeigt werden oder direkt in die Pressensteuerung einfließen und die Parameter in Echtzeit oder "on the fly" anpassen. Dies kann global (z.B. mit Hilfe eines optimierten Parametersatzes für alle in einer Abpressung zu verarbeitenden Platinen) oder spezifisch für jede einzelne Platine und/oder jedes einzelne Bauteil erfolgen.

Es ist noch eine Ausgestaltung, dass der mindestens eine Verarbeitungs-Parameter mindestens einen Verarbeitungsprozess-Parameter und/oder mindestens einen Werkzeug-Parameter und/oder mindestens einen Qualitäts-Parameter umfasst. Verarbeitungsprozess-Parameter können beispielsweise den Verarbeitungsablauf betreffende Parameter wie eine Umgebungstemperatur, Pressendrücke, Nachbeölungsparameter usw. umfassen. Werkzeugparameter können zum Bearbeiten der Platinen charakterisierende Parameter wie Distanzeinstellungen, eine Werkzeugtemperatur, eine Werkzeuggeometrie usw. umfassen. Qualitäts-Parameter können eine Qualität des entstandenen Bauteils charakterisierende - insbesondere gemessene - Parameter wie eine Härte, ein Vorhandensein von Rissen usw. umfassen.

Es ist ferner eine Ausgestaltung, dass die verarbeiteten Platinen bzw. Bauteile zu ihrem weiteren Verwenden anhand zumindest ihres mindestens einen Verarbeitungs-Parameters und ggf. zusätzlich mittels mindestens eines Teile-Parameters aussortiert werden. So kann - insbesondere analog zu den Platinen - eine Qualitätssicherung auch für folgende Baugruppen verbessert werden. Das Aussortieren kann manuell oder automatisiert erfolgen. Insbesondere kann für die Bauteile schon im Vorfeld (z.B. anhand der erfassten Material-Parameter und/oder Herstellungsprozess-Parameter an der Coil-Anlage, der Verarbeitungsprozess-Parameter z.B. an einer Presse, der Bauteilqualität und der bekannten Prädiktions-Modelle) bestimmt werden, dass die Bauteilqualität in den Folgeprozessen zu Problemen führen kann oder eine Anpassung von Prozessabläufen in mindestens einem Folgeprozess (z.B. ein Fügen im Karosseriebau, ein Lackieren usw.) zu aufwendig ist.

Den aus den Platinen hergestellten Bauteilen kann analog zu der Teile-ID eine Bauteil-ID zugewiesen werden. Die Bauteil-ID kann verknüpft mit dem mindestens einen Verarbeitungs-Parameter bereitgestellt werden, insbesondere in einer Datenbank. Die Bauteil-ID kann auch mit dem mindestens einen Teile-Parameter und/oder der Teile-ID der zugrundeliegenden Platine verknüpft sein bzw. verknüpft gespeichert sein. Die Bauteil-ID kann der Teile-ID entsprechen bzw. die Teile-ID auch als eine Bauteil-ID verwendet werden oder aber die Bauteil-ID wird als eigenständige ID aufgebracht / angebracht / eingebracht und mit der Teile-ID und / oder den unter der Teile-ID gespeicherten Werten verknüpft. So kann ein Prüfaufwand durch Eingrenzung von Problembauteilen reduziert werden, da eine detaillierte Kenntnis darüber vorliegt, welche Bauteile mit ähnlichen Verarbeitungs-Parametern geformt wurden und/oder auf Platinen mit ähnlichen Teile-Parametern beruhen und somit ebenfalls kritisch sein können.

Es ist auch eine Ausgestaltung, dass den Bauteilen eine Bauteil-Lagerungskennung ("Lagerungs-ID") zugeordnet wird. Diese Lagerungs-ID kann z.B. eine Zugehörigkeit zu einem bestimmten Bauteilestapel und/oder Aufbewahrungsbehälter darstellen. Vorteilhafterweise wird so ein Prüfaufwand durch die genaue Kenntnis des aktuellen Standortes von Problembauteilen verringert. Auch kann - z.B. analog zu der Stapel-ID oder Container-ID - eine Logistik vereinfacht werden, da die Erfassung der Lagerposition des Bauteilestapels oder des Aufbewahrungsbehälters möglich und dann jederzeit Kenntnis darüber vorhanden ist, an welcher Stelle sich jedes einzelne Bauteil gerade befindet. Dies wiederum ermöglicht eine Anlieferung der Bauteilestapel oder Aufbewahrungsbehälter mit den Bauteilen an eine Karosseriebauzelle in einer für den Prozess bzw. in Bezug auf eine Qualität verbesserten Reihenfolge.

Weitere Verarbeitungsabläufe wie ein Lackieren, ein Montieren usw. können analog durchgeführt werden.

Noch eine Weiterbildung umfasst ein Zusammenbauen einzelner Bauteile zu einer Baugruppe, von denen mindestens ein (Einzel-) Bauteil wie oben beschrieben aus einer Platine verarbeitet bzw. hergestellt worden ist. Es können dabei die Bauteil-IDs der Einzelbauteile, die an einer entsprechenden Verarbeitungsstelle zu der Baugruppe zusammengefasst werden, einer Nummer oder Kennung der Baugruppe (z.B. einer ZB- oder Zusammenbau-Nummer) zugewiesen werden bzw. damit verknüpft werden, beispielsweise in einer Datenbank. Die entsprechende Vorgehensweise kann weiter angewandt werden, wenn beispielsweise die Baugruppe in einer größeren Baugruppe verbaut wird, bis hin zu einer kompletten Karosserie und zu einem kompletten Fahrzeug. Die ZB-Nummer des Fahrzeugs kann seiner Fahrzeugidentifikationsnummer (VIN) entsprechen. Durch Verknüpfung der Kennungen in einer Datenbank ist die zugehörige Information bzw. sind die zugehörigen Parameter auch dann noch abrufbar, wenn die eigentliche Bauteil-ID nicht mehr lesbar ist (beispielsweise durch schlechte Einsichtbarkeit nach dem Karosseriebau oder durch ein Bedecken mit Lack nach einem Lackieren). Es wird somit eine komplette detaillierte Prozesstransparenz vom Einzelteil bis zum fertigen Fahrzeug ermöglicht. Zudem wird ein Ausschuss verringert. Auch ist eine Rückverfolgbarkeit möglich und - falls gewünscht - mit Zugriffrechten steuerbar. Beispielsweise kann bei einer Steuerbarkeit der Zugriffrechte eine Information nicht lesbar auf dem Einzelteil angebracht sein, sondern nur über eine Verknüpfung mit einer Kennung (z.B. der VIN bzw. ZB-Nummer) in der Datenbank abgelegt sein.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden schematischen Beschreibung eines Ausführungsbeispiels, das im Zusammenhang mit den Zeichnungen näher erläutert wird.
- **Fig.1**: skizziert ein erstes Teilverfahren zum Herstellen eines Bauteils eines Fahr-zeugs aus einem Metallband; und
- **Fig.2**: skizziert ein zweites Teilverfahren zum Herstellen eines Bauteils eines Fahrzeugs aus einem Metallband

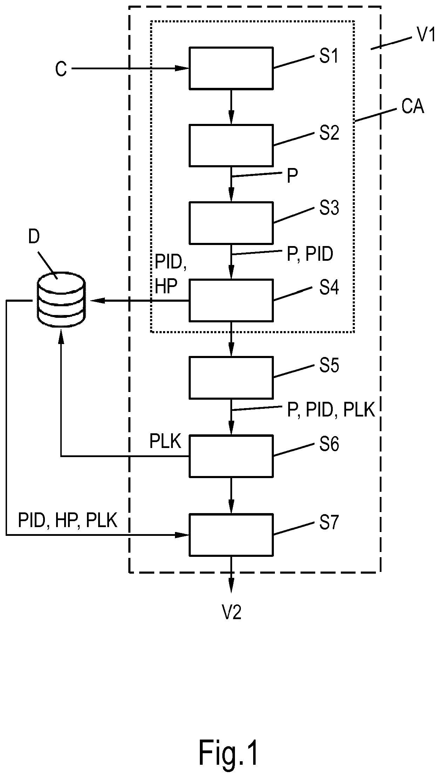

**Fig.1** skizziert einen Ablauf eines ersten Teilverfahrens V1 oder einen ersten Abschnitt eines Verfahrens zum Herstellen eines Bauteils BT eines Fahrzeugs. Das Teilverfahren V1 betrifft ein Herstellen von Platinen P aus Metallband mittels einer Coil-Anlage CA.

Bei dem Verfahren V1 wird in einem ersten Schritt S1 an der Coil-Anlage CA eine platinengenaue Bestimmung mindestens eines Teile-Parameters eines von einer zuvor bereitgestellten Coil C abgewickelten Metallbands durchgeführt.

In einem zweiten Schritt S2 wird das Metallband durch die Coil-Anlage CA zu Platinen P vereinzelt. Dies kann beispielsweise durch Abpressen von Abschnitten des abgewickelten Metallbands der Coil C geschehen.

Die aus dem Metallband vereinzelten oder noch zu vereinzelnden Platinen werden in einem Schritt S3 mit einer individuellen Kennung (Teile-ID, die hier auch als Platinen-ID bezeichnet werden kann) PID versehen. Der Schritt S3 kann vor, während oder nach dem Schritt S2 ausgeführt werden. Die Teile-ID PID kann durch Laserbeschriften aufgebracht werden.

In einem Schritt S4 werden die Teile-IDs PID mit einem jeweils bestimmten mindestens einen Teile-Parameter HP verknüpft bereitgestellt, z.B. in einer Datenbank D. Der mindestens eine Teile-Parameter kann mindestens einen - auch globalen - Materialparameter und/oder mindestens einen Herstellungsprozess-Parameter umfassen. Die Datenbank D kann auf einem Server, in einem Netzwerk, in der Cloud usw. gespeichert sein. Der Schritt S4 kann vor, während oder nach dem Schritt S3 ausgeführt werden.

In einem folgenden Schritt S5 können die mit ihren Teile-IDs PID versehenen Platinen P gelagert werden, z.B. in einem Stapel und/oder in einem Aufnahmebehälter. Dem Stapel und/oder in einem Aufnahmebehälter wird eine Kennung ("Materialteil-Lagerungskennung") PLK zugewiesen.

Die Materialteil-Lagerungskennung PLK wird in einem Schritt S6 mit der Teile-ID verknüpft, insbesondere durch einen entsprechenden Eintrag in der Datenbank D. Dadurch ist den Platinen P auch die Materialteil-Lagerungskennung PLK zugeordnet worden. Folglich kann bei einer Auswertung der Datenbank D schnell herausgefunden werden, in welchem Stapel / in welchem Behälter sich eine bestimmte Platine P befindet, und welche Teile-Parameter HP der Platine P zugeordnet sind. Dies kann auch eine Position der Platine P in dem Stapel / Behälter umfassen. Zudem kann ausgewertet werden, welche Platinen P sich in einem bestimmten Stapel / Behälter befinden. Schritt S6 kann vor, während oder nach Schritt S5 durchgeführt werden.

Vor oder nach Schritt S6 kann ein Schritt S7 durchgeführt werden, bei dem die Platinen anhand mindestens eines zugehörigen Teile-Parameters HP aussortiert werden. Folglich können Platinen P getestet werden und ungenügende Platinen P einfach ausgesondert werden. Insbesondere können so auch Platinen P ausgesondert und/oder einer Prüfung unterzogen werden, die (noch) nicht selbst geprüft worden sind, aber in ihren Parametern so ähnlich einer ausgesonderten Platine P sind, dass ein ähnliches Ergebnis einer Prüfung zu erwarten ist.

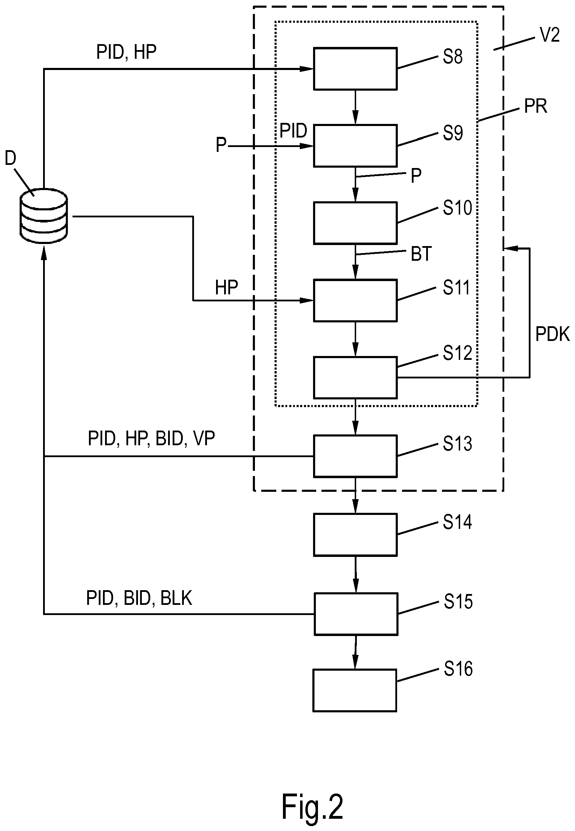

**Fig.2** skizziert einen Ablauf eines zweiten Teilverfahrens V2 des Verfahrens zum Herstellen des Bauteils des Fahrzeugs. Das Teilverfahren V2 dient zum Verarbeiten der zuvor im Teilverfahren V1 vereinzelten Platinen P. Das Verarbeiten kann insbesondere ein Umformen durch Pressen in einer Pressenstraße PR umfassen.

Dabei können in einem Schritt S8 mittels Verfügbarmachung der Datenbank D individuelle Kennungen von Platinen P verknüpft mit jeweils mindestens einem dazu bestimmten Teile-Parameter HP bereitgestellt werden, z.B. zur Nutzung durch die Pressenstraße PR.

In einem Schritt S9 werden Platinen P zum Pressen bereitgestellt und dazu deren jeweilige individuelle Kennung PID ausgelesen. Damit ist der Pressenstraße PR bekannt, welche Platinen P mit welchen durch die zugehörigen Herstell-Parametern HP bestimmten Eigenschaften zu verarbeiten sind. Alternativ können Platinen P mit bestimmten Eigenschaften vorausgesucht und bereitgestellt werden. Das Auslesen der Teile-ID PID kann dann einem Auswahlfehler vorbeugen.

In einem Schritt S10 werden die Platinen P dann zu jeweiligen Bauteilen BT umgeformt, insbesondere verpresst. Dabei können die Platinen P beruhend auf mindestens einem ihrer Teile-ID PID zugeordneten Teile-Parameter HP verpresst werden.

Insbesondere kann in einem Schritt S11 mindestens ein Teile-Parameter HP als eine Eingangsgröße für eine prädiktive Analyse verwendet werden und in einem Schritt S12 mindestens ein aus der prädiktiven Analyse bestimmter Prädiktor PDK für eine Bauteilqualität als ein jeweiliger Parameter zum Verpressen der Platine P verwendet wird.

In einem Schritt S13 werden die Teile-IDs PID der verarbeiteten Platinen P und ggf. entsprechende Bauteil-IDs BID der Bauteile BT mit jeweiligen Verarbeitungs-Parametern VP verknüpft bereitgestellt, vorzugsweise in der bereits beschriebenen Datenbank D. Der jeweils mindestens eine Verarbeitungs-Parameter VP kann mindestens einen Verarbeitungsprozess-Parameter und/oder mindestens einen Werkzeug-Parameter und/oder mindestens einen Qualitäts-Parameter umfassen. In der Datenbank D kann folglich der Teile-ID PID auch der jeweilige mindestens eine Verarbeitungs-Parameter VP zugeordnet sein, ggf. auch eine eigenständige Bauteil-ID BID.

In einem folgenden Schritt S14 können die verpressten Platinen P bzw. Bauteile BT gelagert werden, z.B. in einem Stapel und/oder in einem Aufnahmebehälter. Dem Stapel und/oder in einem Aufnahmebehälter wird eine Kennung ("Bauteil-Lagerungskennung") BLK zugewiesen.

Die Bauteil-Lagerungskennung wird in einem Schritt S15 mit der Teile-ID PID verknüpft (und zwar direkt oder über die Bauteil-ID BID), insbesondere durch einen entsprechenden Eintrag in der Datenbank D. Dadurch ist den verarbeiteten Platinen bzw. Bauteilen die Bauteil-Lagerungskennung BLK zugeordnet worden. Folglich kann bei einer Auswertung der Datenbank D schnell herausgefunden werden, in welchem Stapel / in welchem Behälter sich ein bestimmtes Bauteil BT befindet, und welche Teile-Parameter HP und/oder Verarbeitungs-Parameter VP dem Bauteil zugeordnet sind. Dies kann auch eine Position des Bauteils BT in dem Stapel / Behälter umfassen. Zudem kann ausgewertet werden, welche Bauteile BT sich in einem bestimmten Stapel / Behälter befinden. Schritt S15 kann vor, während oder nach Schritt S14 durchgeführt werden.

Vor oder nach Schritt S15 kann ein Schritt S16 durchgeführt werden, bei dem die Bauteile BT anhand zumindest ihres mindestens einen bestimmten Verarbeitungs-Parameters VP aussortiert werden. So können Bauteile BT getestet werden und ungenügende Bauteile BT ausgesondert werden. Insbesondere können so auch Bauteile BT ausgesondert und/oder einer Prüfung unterzogen werden, die (noch) nicht selbst geprüft worden sind, aber in ihren Parametern HP, VP so ähnlich einem ausgesonderten Bauteil BT sind, dass ein ähnliches Ergebnis einer Prüfung zu erwarten ist.

Die Verfahren V1 und V2 können somit zusammen Teilverfahren zum Herstellen eines Bauteils BT aus einem Metallband darstellen, bei dem Platinen P gemäß dem Verfahren V1 hergestellt werden und ihre Teile-IDs PID und ihre damit verknüpften Teile-Parameter HP bereitgestellt werden, die Platinen P mit ihren Teile-IDs PID und damit verknüpften Teile-Parametern HP für das Verfahren V2 übernommen werden und die bereitgestellten Platinen P gemäß dem Teilverfahren V2 zu Bauteilen BT verarbeitet (hier: zumindest verpresst) werden.

Es können sich analog weitere Teilverfahren anschließen, beispielsweise in Bezug auf ein Zusammensetzen von Baugruppen, Lackieren usw.

Selbstverständlich ist die vorliegende Erfindung nicht auf das gezeigte Ausführungsbeispiel beschränkt.

Allgemein kann unter "ein", "eine" usw. eine Einzahl oder eine Mehrzahl verstanden werden, insbesondere im Sinne von "mindestens ein" oder "ein oder mehrere" usw., solange dies nicht explizit ausgeschlossen ist, z.B. durch den Ausdruck "genau ein" usw.

Auch kann eine Zahlenangabe genau die angegebene Zahl als auch einen üblichen Toleranzbereich umfassen, solange dies nicht explizit ausgeschlossen ist.

### Bezugszeichenliste

- BT: Bauteil
- C: Coil
- CA: Coil-Anlage
- D: Datenbank
- HP: Teile-Parameter
- P: Platine
- PDK: Prädiktor
- PID: Teile-ID
- PLK: Platinen-Lagerungserkennung
- PR: Pressenstraße
- S1-S16: Verfahrensschritte
- V1: erstes Teilverfahren
- V2: zweites Teilverfahren
- VP: Verarbeitungsparameter

## Patentansprüche

1. Verfahren (V1, V2) zum Herstellen eines Bauteils aus einem bandförmigen Halbzeug in Form einer Metall-Coil mittels einer Coil-Anlage (CA), bei dem
- vereinzelte Materialteile in Form metallischer Platinen (P) aus der Metall-Coil hergestellt werden, indem
• ein platinengenaues Messen mindestens eines Teile-Parameters (HP) der Metall-Coil durchgeführt wird (S1),
• aus der Metall-Coil die Platinen (P) vereinzelt werden (S2) und mit einer individuellen Kennung (PID) versehen werden (S3) und
• die individuellen Kennungen (PID) der Platinen (P) mit dem jeweils bestimmten mindestens einen Teile-Parameter (HP) verknüpft bereitgestellt werden (S4, S8, D),
- folgend eine jeweilige individuelle Kennung (PID) der Platinen (P) abgelesen wird (S9),
- die Platinen (P) beruhend auf mindestens einem ihrer individuellen Kennung (PID, BID) zugeordneten Teile-Parameter (HP) zu jeweiligen Bauteilen (BT) verarbeitet werden (S10), und
- die individuellen Kennungen (PID) dieser Bauteile (BT) mit jeweiligen Verarbeitungs-Parametern (VP) verknüpft bereitgestellt werden (S13),
wobei
- der mindestens eine Teile-Parameter (HP) mindestens einen Herstellungsprozess-Parameter umfasst und
- die Platinen (P) mit dem Vereinzeln beruhend auf mindestens einem ihrer individuellen Kennung (PID) zugeordneten Teile-Parameter (HP) umgeformt werden, wobei
- die Verarbeitungs-Parameter (VP) des Umformens an den mindestens einen Teile-Parameter (HP) angepasst werden und wobei die individuellen Kennungen (PID) und zugeordneten Teile-Parameter (HP) miteinander verknüpft als Datensätze in einer Datenbank gespeichert bereitgestellt werden.

2. Verfahren (V1) nach Anspruch 1, bei dem die bestimmten Teile-Parameter (HP) als Eingangsgrößen für eine prädiktive Analyse verwendet werden (S11) und mindestens ein aus der prädiktiven Analyse bestimmter Prädiktor (PDK) für eine Bauteilqualität als ein jeweiliger Parameter zum Verarbeiten der vereinzelten Materialteile (S10) verwendet wird (S12).

3. Verfahren (V1) nach einem der vorhergehenden Ansprüche, bei dem der mindestens eine Teile-Parameter (HP) zusätzlich mindestens einen Materialparameter umfasst.

4. Verfahren (V1) nach Anspruch 3, bei dem der mindestens eine Materialparameter ein Vorhandensein einer Ölfilmauflage während der Vereinzelung der Platinen (P) umfasst.

5. Verfahren (V1) nach einem der vorhergehenden Ansprüche, bei dem der mindestens eine Teile-Parameter (HP) einen Herstellungsprozess-Parameter in Form einer Umgebungstemperatur umfasst.

6. Verfahren (V1) nach einem der vorhergehenden Ansprüche, bei dem den Platinen (P) eine Materialteil-Lagerungskennung (PLK) zugeordnet wird (S6).

7. Verfahren (V1) nach einem der vorhergehenden Ansprüche, bei dem die Platinen (P) anhand mindestens eines zugehörigen Teile-Parameters (HP) aussortiert werden (S7).

8. Verfahren (V2) nach einem der vorhergehenden Ansprüche, bei dem der mindestens eine Verarbeitungs-Parameter (VP) mindestens einen Verarbeitungsprozess-Parameter und/oder mindestens einen Werkzeug-Parameter und/oder mindestens einen Qualitäts-Parameter umfasst.

9. Verfahren (V2) nach einem der vorhergehenden Ansprüche, bei dem den Bauteilen (BT) eine Bauteil-Lagerungskennung (BLK) zugeordnet wird (S14, S15).

10. Verfahren (V2) nach einem der vorhergehenden Ansprüche, bei dem die Bauteile (BT) anhand zumindest ihres mindestens einen bestimmten Verarbeitungs-Parameters (VP) aussortiert werden (S16).

## Claims

1. Method (V1, V2) for producing a component from a strip-shaped semi-finished product in the form of a metal coil by means of a coil installation (CA), in which
- separated material parts in the form of metal blanks (P) are produced from the metal coil, in that
• a blank-accurate measurement of at least one part parameter (HP) of the metal coil is carried out (S1),
• the blanks (P) are separated from the metal coil (S2) and are provided with an individual identification (PID) (S3) and
• the individual identifications (PID) of the blanks (P) are provided in a manner linked to the respectively determined at least one part parameter (HP) (S4, S8, D),
- thereafter, a respective individual identification (PID) of the blanks (P) is read (S9),
- the blanks (P) are processed into respective components (BT) on the basis of at least one part parameter (HP) assigned to their individual identification (PID, BID) (S10) and
- the individual identifications (PID) of these components (BT) are provided in a manner linked to respective processing parameters (VP) (S13),
wherein
- the at least one part parameter (HP) comprises at least one production process parameter and
- the blanks (P) are shaped by the separating process on the basis of at least one part parameter (HP) assigned to their individual identification (PID), wherein
- the processing parameters (VP) of the shaping process are adapted to the at least one part parameter (HP) and wherein the individual identifications (PID) and assigned part parameters (HP) are provided in a manner linked to one another as data records stored in a database.

2. Method (V1) according to Claim 1, in which the determined part parameters (HP) are used as input variables for a predictive analysis (S11) and at least one predictor (PDK), determined from the predictive analysis, for a component quality is used as a respective parameter for processing the separated material parts (S10) (S12).

3. Method (V1) according to one of the preceding claims, in which at least one part parameter (HP) additionally comprises at least one material parameter.

4. Method (V1) according to Claim 3, in which the at least one material parameter comprises a presence of an oil film coating during the separation of the blanks (P).

5. Method (V1) according to one of the preceding claims, in which the at least one part parameter (HP) comprises a production process parameter in the form of an ambient temperature.

6. Method (V1) according to one of the preceding claims, in which the blanks (P) are assigned a material-part storage identification (PLK) (S6).

7. Method (V1) according to one of the preceding claims, in which the blanks (P) are screened on the basis of at least one associated part parameter (HP) (S7).

8. Method (V2) according to one of the preceding claims, in which the at least one processing parameter (VP) comprises at least one processing process parameter and/or at least one tool parameter and/or at least one quality parameter.

9. Method (V2) according to one of the preceding claims, in which the components (BT) are assigned a component storage identification (BLK) (S14, S15).

10. Method (V2) according to one of the preceding claims, in which the components (BT) are screened on the basis of at least their at least one determined processing parameter (VP) (S16).

## Revendications

1. Procédé (V1, V2) de fabrication d'un élément structurel à partir d'un demi-produit en forme de bande sous la forme d'une bobine de métal au moyen d'une ligne de bobinage (CA), dans lequel
- des pièces de matériau séparées sont fabriquées sous la forme de platines métalliques (P) à partir de la bobine de métal, en ce que
• une mesure précise par platine pour au moins un paramètre de pièce (HP) de la bobine de métal est effectuée (S1),
• les platines (P) sont séparées (S2) de la bobine de métal et sont munies (S3) d'un identifiant individuel (PID), et
• les identifiants individuels (PID) des platines (P) sont fournis (S4, S8, D) en étant associés audit au moins un paramètre de pièce (HP) respectivement déterminé,
- ensuite, un identifiant individuel respectif (PID) des platines (P) est lu (S9),
- sur la base d'au moins un paramètre de pièce (HP) associé à leur identifiant individuel (PID, BID), les platines (P) sont usinées (S10) en éléments structurels respectifs (BT), et
- les identifiants individuels (PID) de ces éléments structurels (BT) sont fournis (S13) en étant associés à des paramètres d'usinage (VP) respectifs, dans lequel
- ledit au moins un paramètre de pièce (HP) comprend au moins un paramètre de processus de fabrication, et
- conjointement avec la séparation, les platines (P) sont façonnées sur la base d'au moins un paramètre de pièce (HP) associé à leur identifiant individuel (PID), dans lequel
- les paramètres d'usinage (VP) du façonnage sont adaptés audit au moins un paramètre de pièce (HP), et les identifiants individuels (PID) et les paramètres de pièce associés (HP) sont fournis en étant associés les uns aux autres, en étant stockés sous forme d'enregistrements dans une base de données.

2. Procédé (V1) selon la revendication 1, dans lequel les paramètres de pièce (HP) déterminés sont utilisés (S11) comme des grandeurs d'entrée pour une analyse prédictive, et au moins un prédicteur (PDK) déterminé selon l'analyse prédictive est utilisé (S12) pour une qualité d'élément structurel comme un paramètre respectif pour l'usinage des pièces de matériau séparées (S10).

3. Procédé (V1) selon l'une quelconque des revendications précédentes, dans lequel ledit au moins un paramètre de pièce (HP) comprend en outre au moins un paramètre de matériau.

4. Procédé (V1) selon la revendication 3, dans lequel ledit au moins un paramètre de matériau comprend une présence d'une application de film huileux pendant la séparation des platines (P).

5. Procédé (V1) selon l'une quelconque des revendications précédentes, dans lequel ledit au moins un paramètre de pièce (HP) comprend un paramètre de processus de fabrication sous la forme d'une température ambiante.

6. Procédé (V1) selon l'une quelconque des revendications précédentes, dans lequel un identifiant de stockage de matériau (PLK) est associé (S6) aux platines (P).

7. Procédé (V1) selon l'une quelconque des revendications précédentes, dans lequel les platines (P) sont triées (S7) à l'aide d'au moins un paramètre de pièce associé (HP).

8. Procédé (V2) selon l'une quelconque des revendications précédentes, dans lequel ledit au moins un paramètre d'usinage (VP) comprend au moins un paramètre de processus d'usinage et/ou au moins un paramètre d'outil et/ou au moins un paramètre de qualité.

9. Procédé (V2) selon l'une quelconque des revendications précédentes, dans lequel un identifiant de stockage d'élément structurel (BLK) est associé (S14, S15) aux éléments structurels (BT).

10. Procédé (V2) selon l'une quelconque des revendications précédentes, dans lequel les éléments structurels (BT) sont triés (S16) à l'aide d'au moins un paramètre d'usinage déterminé (VP).
